# EUROPEAN PATENT APPLICATION

(11) **EP 4 815 536 A1**
(43) Date of publication of application: **30.09.2026**
(21) Application number: 24893028.1
(22) Date of filing: 24.09.2024
(51) Int. Cl.: H04W 12/128

(54) **METHOD AND APPARATUS FOR DETERMINING RISKY-ACTIVITY USER, AND ELECTRONIC DEVICE AND STORAGE MEDIUM**

(30) Priority: 22.11.2023 CN 202311570999
(71) Applicant: China Mobile IOT Company Limited, Nan'an District, Chongqing 401336 (CN); CHINA MOBILE COMMUNICATIONS GROUP CO., LTD., Beijing 100032 (CN)
(72) Inventor: TANG, Guojun, Chongqing 401336 (CN)
(74) Representative: Herrero & Asociados, S.L.
(86) International application number: PCT/CN2024/120873
(87) International publication number: WO 2025/107869

(57) **Abstract**

The present application relates to the field of border roaming risk assessment. Disclosed are a method and apparatus for determining a risky-activity user, and a device and a storage medium. The method for determining a risky-activity user comprises: acquiring base station information of each base station among a first base station, a second base station and a third base station, which are associated with a risky-activity area, wherein the first base station is a base station that covers at least part of the risky-activity area, the second base station is a base station in which there is a risk of covering at least part of the risky-activity area, and the third base station is a neighboring base station of the first base station or the second base station; determining at least one potential risky user on the basis of the base station information of each base station among the first base station, the second base station and the third base station; acquiring communication behavior data of each potential risky user among the at least one potential risky user; and determining a risky-activity user from among the at least one potential risky user on the basis of the communication behavior data of each potential risky user.

## Description

### CROSS-REFERENCE TO RELATED APPLICATIONS

The present application claims priority to Chinese Patent Application No. 202311570999.9, filed on November 22, 2023, which is herein incorporated by reference in its entirety.

### TECHNICAL FIELD

The present disclosure relates to the technical field of border roaming risk assessment, and in particular to a method for determining a risky-activity user, a device for determining the risky-activity user, an electronic device, and a storage medium.

### BACKGROUND

With development of Internet of Things (IoT) industry, a scale of an IoT card device has increased, and a business environment has become more complex. This has led to an increased risk of theft and abuse of a IoT card, which affects normal production and operation of an enterprise. Therefore, it particularly important to perform border roaming risk assessment for a user through the IoT card.

In a border roaming risk assessment method in related art, the risk assessment is generally performed by Internet of Humans based on communication characteristics. For example, a single number frequently calls multiple unfamiliar numbers, and corresponding abnormal number is intercepted.

However, this method only assesses and analyzes the roaming risk based on voice features of the H2H network, which can easily lead to lower accuracy in the border roaming risk assessment.

### SUMMARY OF THE DISCLOSURE

The present disclosure provides a method for determining a risky-activity user, a device for determining the risky-activity user, an electronic device, and a storage medium, which can improve accuracy of border roaming risk assessment.

In a first aspect, embodiments of the present disclosure provide a method for determining a risky-activity user. The method includes:
obtaining base station information of each of a first base station, a second base station, and a third base station associated with a risky-activity area; wherein the first base station is a base station that covers at least a portion of the risky-activity area, the second base station is a base station that has a risk of covering the at least a portion of the risky-activity area, and the third base station is a neighboring base station that is adjacent to the first base station or the second base station;
determining at least one potential risk user based on the base station information of each of the first base station, the second base station, and the third base station; wherein the potential risk user is a user that is located in a coverage area of at least one of the first base station, the second base station, and the third base station;
obtaining communication behavior data of each potential risk user of the at least one potential risk user; and
determining the risky-activity user among the at least one potential risk user based on the communication behavior data of each potential risk user.

In a second aspect, embodiments of the present disclosure provide a device for determining the risky-activity user. The device includes a base station information acquisition module, a first user determination module, a behavior data acquisition module, and a second user determination module.

The base station information acquisition module is configured to obtain base station information of each of a first base station, a second base station, and a third base station associated with a risky-activity area. The first base station is a base station that covers at least a portion of the risky-activity area, the second base station is a base station that has a risk of covering the at least a portion of the risky-activity area, and the third base station is a neighboring base station that is adjacent to the first base station or the second base station.

The first user determination module is configured to determine at least one potential risk user based on the base station information of each of the first base station, the second base station, and the third base station. The potential risk user is a user located in a coverage area of at least one of the first base station, the second base station, and the third base station.

The behavior data acquisition module is configured to obtain communication behavior data of each potential risk user of the at least one potential risk user.

The second user determination module is configured to determine the risky-activity user among the at least one potential risk user based on the communication behavior data of each potential risk user.

In a third aspect, the embodiments of the present disclosure provide an electronic device including a memory and a program or instruction that is stored on the memory and executable on a processor. In a case where the program or the instruction is executed by the processor, the method for determining the risky-activity user in any aspect of the embodiments of the present disclosure is implemented.

In a fourth aspect, the embodiments of the present disclosure provide a readable storage medium storing a program or an instruction. In a case where the program or the instruction is executed by a processor, the method for determining the risky-activity user in any aspect of the embodiments of the present disclosure is implemented.

In a fifth aspect, the embodiments of the present disclosure provide a computer program product. In a case where an instruction in the computer program product is executed by a processor of an electronic device, the electronic device implements the method for determining the risky-activity user in any aspect of the embodiments of the present disclosure.

In the method for determining the risky-activity user provided in some embodiments of the present disclosure, the base station information of each of the first base station, the second base station, and the third base station associated with the risky-activity area is obtained. Then, based on the base station information of each of the first base station, the second base station, and the third base station, at least one potential risk user is determined. Through evaluation and analysis of the base station information, the roaming risk of the user is determined. Then, the communication behavior data of each potential risk user of the at least one potential risk user is obtained. Finally, based on the communication behavior data of each potential risk user, the risky-activity user of the at least one potential risk user is determined. Through the evaluation and the analysis of the communication behavior data of the potential risk user, the roaming risk of the user is further determined. In this way, in the embodiments of the present disclosure, the risk of border roaming for the user is evaluated through the base station information and the communication behavior data, fully considering impact of the base station information and the communication behavior data on the roaming risk, and improving accuracy of border roaming risk assessment.

### BRIEF DESCRIPTION OF THE DRAWINGS

In order to more clearly describe the technical solutions in some embodiments of the present disclosure, hereinafter, the accompanying drawings that are used in the description of some embodiments will be briefly described. For those of ordinary skill in the art, other accompanying drawings may be obtained based on these accompanying drawings without any creative efforts.
FIG. 1 is a flowchart of an embodiment of a method for determining a risky-activity user provided in the present disclosure.
FIG. 2 is a structural schematic view of an embodiment of a device for determining the risky-activity user provided in the present disclosure.
FIG. 3 is a structural schematic view of an embodiment of an apparatus for determining the risky-activity user provided in the present disclosure.

### DETAILED DESCRIPTION

The features and exemplary embodiments of various aspects of the present disclosure are described in detail below. In order to make the objectives, technical solutions, and advantages of the present disclosure clearer, the present disclosure is further described in detail below with reference to the accompanying drawings and embodiments. It should be understood that the specific embodiments described herein are only for explaining the present disclosure and are not intended to limit the present disclosure. For those skilled in the art, the present disclosure can be implemented without requiring some of these specific details. The following description of the embodiments is only intended to provide a better understanding of the present disclosure by illustrating examples.

It should be noted that in the present disclosure, relational terms such as first and second are only configured to distinguish one entity or operation from another entity or operation, and do not necessarily require or imply any real relationship or order between these entities or operations. Moreover, the terms "comprising", "including", or any other variation thereof are intended to encompass non-exclusive inclusion, such that a process, a method, an item, or a device including a series of elements not only includes those elements, but also includes other elements that are not explicitly listed, or also includes elements inherent to such process, method, item, or device. Without further limitations, the elements limited by the statement "comprising...", or "including..." do not exclude the existence of other identical elements in the process, method, item, or device including said elements.

Acquisition, storage, use, and processing of data in technical solutions of the present disclosure comply with relevant national laws and regulations.

In a border roaming risk assessment method in related art, the risk assessment is generally performed by Internet of Humans based on communication characteristics. For example, a single number frequently calls multiple unfamiliar numbers, and corresponding abnormal number is intercepted. However, this method only assesses and analyzes a roaming risk based on voice features of the H2H network, which can easily lead to lower accuracy in the border roaming risk assessment.

The purpose of the present disclosure is to provide a method for determining a risky-activity user, a device for determining the risky-activity user, an apparatus, and a storage medium. In the method for determining the risky-activity user provided in some embodiments of the present disclosure, base station information of each of a first base station, a second base station, and a third base station associated with a risky-activity area is obtained. Then, based on the base station information of each of the first base station, the second base station, and the third base station, at least one potential risk user is determined. Through evaluation and analysis of the base station information, a roaming risk of the user is determined. Then, communication behavior data of each potential risk user of the at least one potential risk user is obtained. Finally, based on the communication behavior data of each potential risk user, the risky-activity user of the at least one potential risk user is determined. Through the evaluation and the analysis of the communication behavior data of the potential risk user, the roaming risk of the user is further determined. In this way, in the embodiments of the present disclosure, the risk of border roaming for the user is evaluated through the base station information and the communication behavior data, fully considering impact of the base station information and the communication behavior data on the roaming risk, and improving accuracy of border roaming risk assessment.

The method for determining the risky-activity user, the device for determining the risky-activity user, the electronic device, and the storage medium provided in the present disclosure are described below. First, the method for determining the risky-activity user is described below.

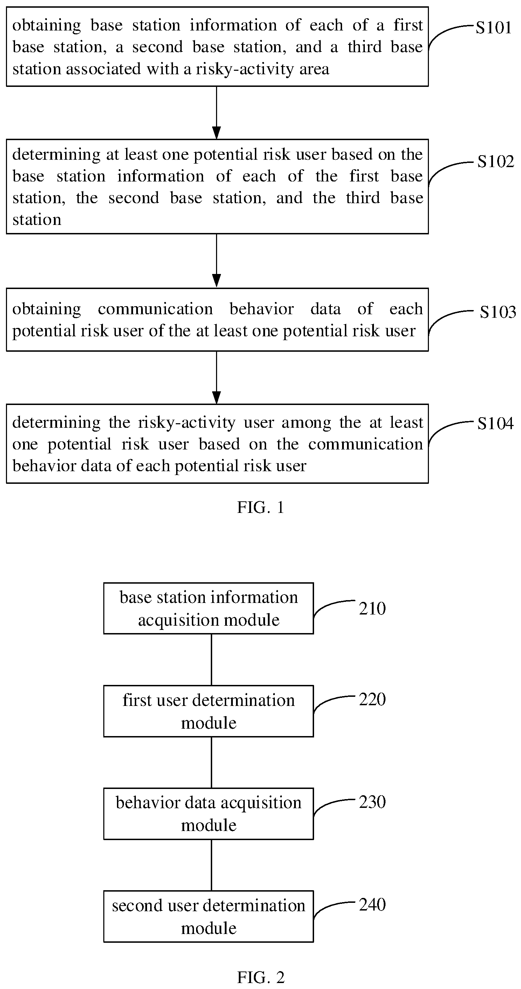

FIG. 1 provides a flowchart of a method for determining a risky-activity user, which is applied to a monitoring platform. The method may include the following operations at block S101 to S104.

At block S101, the method may include obtaining base station information of each of a first base station, a second base station, and a third base station associated with a risky-activity area.

In the present embodiment, the first base station is a base station that covers at least a portion of the risky-activity area, the second base station is a base station that has a risk of covering at least a portion of the risky-activity area, and the third base station is a neighboring base station that is adjacent to the first base station or the second base station.

The risky-activity area refers to an area where there is a risk of IoT (Internet of Things) card border roaming. The neighboring base station refers to those with adjacent coverage areas. In some embodiments, a coverage area of an A1 base station is adjacent to that of an A2 base station, a terminal is able to directly enter the coverage area of the A2 base station through a border of the A1 base station, the A1 base station is the neighboring base station of the A2 base station, and the A2 base station is the neighboring base station of the A1 base station.

In some embodiments, in a case where an administrator confirms that there is the risk of the IoT card border roaming in a first area, the first Area is determined as the risky-activity area. An A base station covers a portion of the first area, a B base station is the neighboring base station of the A base station, a coverage area of a C base station is not clear, but there is a risk of covering the first area in the C base station. Therefore, the A base station is the first base station, the B base station is the third base station, and the C base station is the second base station.

In responds to the administrator's operation of importing information of the A base station, the B base station, and the C base station, the monitoring platform obtains base station information of each of the A base station, the B base station, and the C base station.

At block S102, the method may include determining at least one potential risk user based on the base station information of each of the first base station, the second base station, and the third base station.

In the present embodiment, the potential risk user is configured to characterize a user who presents a risk of the IoT card border roaming. The potential risk user is a user that is located in the coverage area of at least one of the first base station, the second base station, and the third base station.

In some embodiments, after obtaining the base station information of each of the first base station, the second base station, and the third base station, the monitoring platform may obtain base station information corresponding to a target user.

In a case where the base station information corresponding to the target user matches at least one of the base station information of the first base station, the base station information of the second base station, and the base station information of the third base station, it is determined that the target user is the potential risk user. In a case where the base station information corresponding to the target user does not match the base station information of each of the first base station, the second base station, and the third base station, it is determined that the target user is not the potential risk user.

At block S103, the method may include obtaining communication behavior data of each potential risk user of the at least one potential risk user.

In the present embodiment, the communication behavior data is data that is configured to characterize communication behavior of the potential risk user. In some embodiments, the communication behavior data may be at least one of SMS (short message service) count data and traffic usage data.

In some embodiments, in a case where the monitoring platform determines that the target user is the potential risk user, at least one of the SMS count data and the traffic usage data of the target user is further obtained.

At block S104, the method may include determining the risky-activity user among the at least one potential risk user based on the communication behavior data of each potential risk user.

In the present embodiment, the risky-activity user is configured to characterize the user who presents the risk of the IoT card border roaming.

In some embodiments, in a case where the monitoring platform obtains the SMS count data and the traffic usage data of the target user, the SMS count data and the traffic usage data of the target user are compared with a maximum usage threshold that is preset.

In a case where at least one of the SMS count data and the traffic usage data of the target user is greater than the maximum usage threshold, it is determined that the target user is the risky-activity user. In a case where both the SMS count data and the traffic usage data of the target user are less than the maximum usage threshold, it is determined that the target user is not the risky-activity user.

In the present embodiment, the base station information of each of the first base station, the second base station, and the third base station associated with the risky-activity area is obtained. Then, based on the base station information of each of the first base station, the second base station, and the third base station, at least one potential risk user is determined. Through evaluation and analysis of the base station information, the roaming risk of the user is determined. Then, the communication behavior data of each potential risk user of the at least one potential risk user is obtained. Finally, based on the communication behavior data of each potential risk user, the risky-activity user of the at least one potential risk user is determined. Through the evaluation and the analysis of the communication behavior data of the potential risk user, the roaming risk of the user is further determined. In this way, in the embodiments of the present disclosure, the risk of the border roaming for the user is evaluated through the base station information and the communication behavior data of the potential risk user, fully considering the impact of the base station information and the communication behavior data of the potential risk user on the roaming risk, and improving the accuracy of border roaming risk assessment.

In some embodiments, the operation at block S102 may include:
obtaining message information of the user in the coverage area of each base station of the first base station, the second base station, and the third base station during a preset number of monitoring days, wherein the message information is configured to characterize the base station information in an area where the user is located; and
determining the user located in the coverage areas of at least two base stations of the first base station, the second base station, and the third base station during the preset number of monitoring days as the potential risk user, based on the message information of each user during the preset number of the monitoring days.

In some embodiments, the message information is configured to characterize the base station information in the area where the user is located. In some embodiments, the message information includes an international mobile subscriber identification number (IMSI), a base station location, message time, a base station location area code (LAC), and a base station cell (CELL).

In some embodiments, the administrator sets the monitoring days to 3 days, and a server obtains the preset monitoring days of 3 days in responds to the administrator's operation of setting the monitoring days.

A target IoT card reports the message information to the monitoring platform through a core network element. Based on the received message information, the monitoring platform determines whether the base station in the area where the target IoT card is located belongs to any one of the first base station, the second base station, or the third base station. In a case where the base station in the area where the target IoT card is located does not belong to any one of the first base station, the second base station, or the third base station, the message information corresponding to the target IoT card is discarded.

In a case where the base station in the area where the target IoT card is located belongs to any one of the first base station, the second base station, or the third base station, the monitoring platform monitors the target IoT card based on the IMSI of the message information, obtains multiple message information of the target IoT card during the preset number of the monitoring days, and respectively determines the base stations corresponding to the multiple message information.

In a case where the base stations corresponding to the multiple message information includes at least two base stations of the first base station, the second base station, and the third base station, it is determined that the user corresponding to the target IoT card is the potential risk user. In a case where the base stations corresponding to the multiple message information do not include at least two base stations of the first base station, the second base station, and the third base station, it is determined that the user corresponding to the target IoT card is a non-potential risk user.

In the present embodiment, the user in the coverage area of each base station of the first base station, the second base station, and the third base station is monitored during the preset number of the monitoring days. The message information of the user in the coverage area of each base station of the first base station, the second base station, and the third base station during the preset number of the monitoring days is obtained, it is determined that the user in the coverage areas of at least two base stations of the first base station, the second base station, and the third base station during the preset number of the monitoring days is the potential risk user. It can predict the risk in advance based on existing data, thereby reducing risk losses.

In some embodiments, the operation at block S104 may include:
obtaining the communication behavior data of each potential risk user during the preset number of the monitoring days;
obtaining a resource overage count for each potential risk user based on the communication behavior data;
determining the potential risk users whose resource overage counts are greater than a first preset threshold as first potential high-risk users; and
determining the risky-activity user among the first potential high-risk users based on the message information of each first potential high-risk user.

In the present embodiment, the communication behavior data is configured to characterize usage of a communication resource by the potential risk user. In some embodiments, the communication behavior data may be at least one of the SMS data and the traffic usage data.

The resource overage count refers to the number of times that the communication behavior data of the potential risk user during each time period is greater than an average value.

In some embodiments, the monitoring platform obtains the communication behavior data of each potential risk user for each hour during the preset number of the monitoring days. Using an hour as a time period, it calculates the average value of the communication behavior data for each hour by dividing total amount of the communication behavior data for each hour by total number of the potential risk users.

The communication behavior data of each potential risk user for each hour during the preset number of the monitoring days is compared with the average value of the communication behavior data in the corresponding time period. In a case where the communication behavior data of the potential risk user is greater than the average value, the resource overage count is incremented by one. A final cumulative total is the resource overage count for the potential risk user.

The resource overage count for each potential risk user is compared with the first preset threshold set by the administrator in advance. In a case where the resource overage count is greater than the first preset threshold, it is determined that the corresponding potential risk user is the first potential high-risk user.

Finally, based on the message information of each first potential high-risk user, screening is further performed, so that a target number of users with the higher risk levels in the first potential high-risk users are determined as the risky-activity users.

In the present embodiment, the communication behavior data of each potential risk user during the preset number of the monitoring days is obtained, and risk identification for each potential risk user is further performed through the communication behavior data. Finally, the risky-activity user is screened out based on the message information. In this way, the risk identification for each potential risk user is further performed through the communication behavior data and the message information, which can improve the accuracy of the risk assessment.

In some embodiments, after determining the potential high-risk users whose resource overage counts are greater than the first preset threshold as the first potential high-risk users, the method further includes:
obtaining communication behavior data floating values of the first potential high-risk users based on the communication behavior data of the first potential high-risk users;
obtaining a floating overage count of each first potential high-risk user based on the communication behavior data floating values of the first potential high-risk users; and
determining the potential high-risk users whose floating overage counts are greater than a second preset threshold as second potential high-risk users.

Determining the risky-activity user among the first potential high-risk users based on the message information of each first potential high-risk user, includes:
determining the risky-activity user among the second potential high-risk users based on the message information of each second potential high-risk user.

In some embodiments, the communication behavior data floating value is configured to characterize a ratio of the communication behavior data of the first potential high-risk user during each time period to the communication behavior data during the corresponding time period of the previous day.

The floating overage count refers to the number of times that the communication behavior data floating value of the first potential high-risk user during each time period is greater than a preset floating threshold.

In some embodiments, the monitoring platform obtains the communication behavior data of each first potential high-risk user for each hour during the preset number of the monitoring days. Then, the communication behavior data of the first potential high-risk user during each time period is compared with the communication behavior data during the corresponding time period of the previous day, and the corresponding ratio is determined as the communication behavior data floating value.

The monitoring platform obtains startup time and shutdown time of a terminal corresponding to each first potential risk user. Based on the startup time and the shutdown time, it determines time during which the terminal corresponding to the first potential risk user is in a shutdown state. The corresponding time period in the shutdown state that exceeds one hour is eliminated, and the remaining time period is obtained.

Each communication behavior data floating value of each first potential risk user during the remaining time period is compared with the preset floating threshold that is preset by the administrator. In a case where the communication behavior data floating value of the first potential risk user is greater than the preset floating threshold, the floating overage count is incremented by one, and a final cumulative total is the floating overage count of the potential risk user.

The floating overage count of each potential risk user is compared with the total number of the remaining time periods. In a case where the floating overage count is greater than two-thirds of the total number of the remaining time periods, it is determined that the corresponding potential risk user is the second potential high-risk user.

Finally, based on the message information of each second potential high-risk user, the second potential high-risk users are further screened, so that a target number of users with the higher risk levels in the second potential high-risk users are determined as the risky-activity users.

In the present embodiment, the communication behavior data floating value of each first potential high-risk user during the preset number of the monitoring days is obtained, and the risk identification for each first potential high-risk use is further performed through the communication behavior data floating valuer. Finally, the risky-activity user is screened out based on the message information. In this way, the risk identification for each first potential high-risk use is further performed through the communication behavior data floating value, which can improve the accuracy of the risk assessment.

In some embodiments, determining the risky-activity user among the first potential high-risk users based on the message information of each first potential high-risk user, includes:
determining activity information of each first potential high-risk user based on the message information of each first potential high-risk user during the preset number of the monitoring days; and
determining the first potential high-risk user whose activity information is first risk activity information or second risk activity information as the risky-activity user, based on the activity information of each first potential high-risk user.

In the present embodiment, the activity information is configured to characterize an activity area situation of the first potential high-risk user during the preset number of the monitoring days.

The first risk activity information refers to information of activities that occur simultaneously in the coverage area of the first base station and the coverage area of the second base station during the preset number of the monitoring days. The second risk activity information refers to information of activities that occur simultaneously in the coverage area of the first base station and the coverage area of the third base station during the preset number of the monitoring days.

In some embodiments, the monitoring platform determines the activity information of each first potential high-risk user based on the message information of each first potential high-risk user during the preset number of the monitoring days. Finally, it determines whether the activity information of the first potential high-risk user belongs to the first risk activity information or the second risk activity information. If it belongs, it is determined that the corresponding first potential high-risk user is the risky-activity user.

In the present embodiment, the corresponding activity information is determined based on the message information of the first potential high-risk user during the preset number of the monitoring days. Finally, whether the corresponding first potential high-risk user is the risky-activity user is determined based on the activity information. In this way, based on the activity information corresponding to the first potential high-risk user, the risk identification for the first potential high-risk user is further performed, which can improve the accuracy of the risk assessment.

Based on the method for determining the risky-activity user, and correspondingly, some embodiments of the present disclosure further provide a device for determining the risky-activity user.

As illustrated in FIG. 2, the device for determining the risky-activity user provided in the present embodiment includes a base station information acquisition module 210, a first user determination module 220, a behavior data acquisition module 230, and a second user determination module 240.

The base station information acquisition module 210 is configured to obtain the base station information of each base station of the first base station, the second base station, and the third base station associated with the risky-activity area. The first base station is the base station that covers at least a portion of the risky-activity area, the second base station is the base station that has the risk of covering at least a portion of the risky-activity area, and the third base station is the neighboring base station that is adjacent to the first base station or the second base station.

The first user determination module 220 is configured to determine at least one potential risk user based on the base station information of each base station of the first base station, the second base station, and the third base station. The potential risk user is the user located in the coverage area of at least one base station of the first base station, the second base station, and the third base station.

The behavior data acquisition module 230 is configured to obtain the communication behavior data of each potential risk user of at least one potential risk user.

The second user determination module 240 is configured to determine the risky-activity user among at least one potential risk user based on the communication behavior data of each potential risk user.

In the present embodiment, the base station information acquisition module 210 obtains the base station information of each base station of the first base station, the second base station, and the third base station associated with the risky-activity area. Then, based on the base station information of each base station of the first base station, the second base station, and the third base station, at least one potential risk user is determined through the first user determination module 220. By evaluating and analyzing the base station information, the roaming risk of the user is determined. Then, the communication behavior data of each potential risk user among at least one potential risk user is obtained through the behavior data acquisition module 230. Finally, based on the communication behavior data of each potential risk user, the second user determination module 240 determines the risky-activity user among at least one potential risk user. By evaluating and analyzing the communication behavior data of the potential risk user, the roaming risk of the user is further determined. In this way, in the present embodiment of the present disclosure, the risk of the border roaming for the user is evaluated through the base station information and the communication behavior data, fully considering the impact of the base station information and the communication behavior data on the roaming risk, and improving the accuracy of the border roaming risk assessment.

In some embodiments, the first user determination module 220 includes an information acquisition unit and the first user determination unit.

The information acquisition unit is configured to obtain the message information of the user in the coverage area of each base station of the first base station, the second base station, and the third base station during the preset number of the monitoring days. The message information is configured to characterize the base station information in the area where the user is located.

The first user determination unit is configured to determine the user located in the coverage areas of at least two base stations of the first base station, the second base station, and the third base station during the preset number of monitoring days as the potential risk user, based on the message information of each user during the preset number of the monitoring days.

In some embodiments, the second user determination module 240 includes a data acquisition unit, a count acquisition unit, a second user determination unit, and a third user determination unit.

The data acquisition unit is configured to obtaining the communication behavior data of each potential risk user during the preset number of the monitoring days, and the communication behavior data is configured to characterize the usage of the communication resource by the potential risk user.

The count acquisition unit is configured to obtain the resource overage count of each potential risk user based on the communication behavior data. The resource overage count refers to the number of times that the communication behavior data of the potential risk user during each time period is greater than the average value.

The second user determination unit is configured to determine the potential risk users whose resource overage counts are greater than the first preset threshold as the first potential high-risk users.

The third user determination unit is configured to determine the risky-activity user among the first potential high-risk users based on the message information of each first potential high-risk user.

In some embodiments, the second user determination module 240 further includes a floating value acquisition unit, the count acquisition unit, and a fourth user determination unit.

The floating value acquisition unit is configured to obtain the communication behavior data floating values based on the communication behavior data of the first potential high-risk users. The communication behavior data floating value is configured to characterize the ratio of the communication behavior data of the first potential high-risk user during each time period to the communication behavior data during the corresponding time period of the previous day.

The count acquisition unit is further configured to obtain the floating overage count of each first potential high-risk user based on the communication behavior data floating value. The floating overage count refers to the number of times that the communication behavior data floating value of the first potential high-risk user is greater than the preset floating threshold during each time period.

The fourth user determination unit is configured to determine the potential high-risk users whose floating overage counts are greater than the second preset threshold as the second potential high-risk users.

The third user determination unit is further configured for:
determining the risky-activity user among the second potential high-risk users based on the message information of each second potential high-risk user.

In some embodiments, the third user determination unit is configured for:
determining the activity information of each first potential high-risk user based on the message information of each first potential high-risk user during the preset number of the monitoring days; wherein the activity information is configured to characterize the activity area situation of the first potential high-risk user during the preset number of the monitoring days; and
determining the first potential high-risk user whose activity information is the first risk activity information or the second risk activity information as the risky-activity user based on the activity information of each first potential high-risk user; wherein the first risk activity information refers to the information of activities that occur simultaneously in the coverage area of the first base station and the coverage area of the second base station during the preset number of the monitoring days, and the second risk activity information refers to the information of activities that occur simultaneously in the coverage area of the first base station and the coverage area of the third base station during the preset number of the monitoring days.

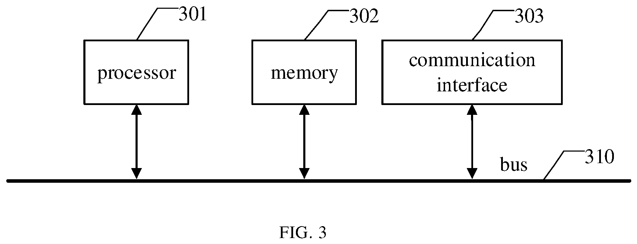

FIG. 3 illustrates a hardware structure schematic view of an apparatus for determining the border risk user provided in the embodiments of the present disclosure.

The apparatus for determining the border risk user may include a processor 301 and a memory 302 that is configured to store a computer program instruction.

In some embodiments, the above-described processor 301 may include a central processing unit (CPU), or an application specific integrated circuit (ASIC), or one or more integrated circuits that may be configured to implement the embodiments of the present disclosure.

The memory 302 may include a mass storage device for data or instructions. By way of example and no limitation, the memory 302 may include a hard disk drive (HDD), a floppy disk drive, a flash memory, an optical disk, a magneto-optical disk, a magnetic tape, or a universal serial bus (USB) drive or a combination of two or more of these. Where appropriate, the memory 302 may include a removable or non-removable (or fixed) medium. Where appropriate, the memory 302 may be located inside or outside the integrated gateway disaster recovery device. In some embodiments, the memory 302 is a non-volatile solid-state memory.

The memory 302 may include a read-only memory (ROM), a random access memory (RAM), a magnetic disk storage medium device, an optical storage medium device, a flash memory device, an electrical, optical or any other physical/tangible memory storage device. Therefore, the memory 302 generally includes one or more tangible (non-transitory) computer readable storage media (such as a memory device) encoded with software which includes a computer-executable instruction. In a case where the software is executed (such as by one or more processors), it is operable to perform the operations described with reference to the method according to an aspect of the present disclosure.

The processor 301 reads and executes the computer program instruction stored in the memory 302, so as to implement the method for determining the border risk user in any one of the above embodiments.

In some embodiments, the apparatus for determining the border risk user may further include a communication interface 303 and a bus 310. As illustrated in FIG. 3, the processor 301, the memory 302, and the communication interface 303 are connected to and communicate with one another through the bus 310.

The communication interface 303 is mainly configured to realize the communication among each module, each apparatus, each unit, and/or each device in the embodiments of the present disclosure.

The bus 310 includes hardware, software, or both, and is configured to couple components of the apparatus for determining the border risk user to one another. By way of example and no limitation, the bus may include an accelerated graphics port (AGP) or other graphics bus, an enhanced industry standard architecture (EISA) bus, a front-side bus (FSB), a hyper-transport (HT) interconnect, an industry standard architecture (ISA) bus, an infinite bandwidth interconnect, a low pin-count (LPC) bus, a memory bus, a microchannel architecture (MCA) bus, a peripheral component interconnect (PCI) bus, PCI-Express (PCI-X) bus, Serial Advanced Technology Attachment (SATA) bus, Video Electronics Standards Association Local (VLB) bus or other suitable bus or a combination of two or more of these. Where appropriate, bus 310 may include one or more buses. Although specific buses are described and illustrated in embodiments of the present disclosure, the present disclosure contemplates any suitable bus or interconnect.

In addition, combined with the method for determining the border risk user in the above embodiments, some embodiments of the present disclosure may provide a computer storage medium to implement the method. The computer storage medium stores the computer program instruction. In a case where the computer program instruction is executed by the processor, the method for determining the border risk user in any one of the above embodiments can be implemented.

It is to be made clear that the present disclosure is not limited to the particular configurations and processes described above and illustrated in the drawings. For the sake of brevity, detailed descriptions of known methods are omitted herein. In the above embodiments, multiple specific operations are described and illustrated as examples. However, the method process of the present disclosure is not limited to the specific operations described and illustrated. Various changes, modifications, and additions, or changes in the order of the operations, may be made by those skilled in the art after appreciating the spirit of the present disclosure.

The functional blocks shown in the above-described structural block diagram may be implemented as hardware, software, firmware, or a combination thereof. When implemented in the hardware, the functional block may be, for example, an electronic circuit, an application specific integrated circuit (ASIC), appropriate firmware, a plug-in, a function card, or the like. When implemented in the software, an element of the present disclosure is a program or a code segment configured to perform a desired task. The program or the code segment may be stored in a machine-readable medium or transmitted over a transmission medium or a communication link by means of a data signal carried in a carrier. The "machine-readable medium" may include any medium capable of storing or transmitting information. An example of the machine-readable medium includes an electronic circuit, a semiconductor memory device, ROM, the flash memory, an erasable ROM (EROM), a floppy disk, a CD-ROM, the optical disk, a hard disk, a fiber-optic medium, a radio frequency (RF) link, or the like. The code segment may be downloaded through a computer network such as the Internet, Intranet, etc.

It is also noted that the exemplary embodiments referred to in the present disclosure describe some methods or systems based on a series of operations or devices. However, the present disclosure is not limited to the order of the operations mentioned above, i.e., the operations may be performed in the order mentioned in the embodiments, or in a different order other than that in the embodiments, or multiple operations may be performed simultaneously.

Various aspects of the present disclosure are described above with reference to flowcharts and/or block diagrams of methods, apparatuses (systems) and computer program products according to embodiments of the present disclosure. It should be understood that each block in the flowchart and/or the block diagram and combinations of blocks in the flowchart and/or the block diagram may be implemented by the computer program instructions. These computer program instructions may be provided to a processor of a general-purpose computer, a special-purpose computer, or other programmable data processing device to produce a machine, such that these instructions which are executed by the processor of the computer or other programmable data processing device, enable the implementation of the function/action specified in one or more blocks of the flowchart and/or the block diagram. Such a processor may be, but not limited to, a general-purpose processor, a special-purpose processor, a special application processor, or a field programmable logic circuit. It is also understood that each of the blocks in the block diagram and/or flowchart, as well as combinations of the blocks in the block diagram and/or flowchart, may also be implemented by a specialized hardware that performs the specified function or action, or may be implemented by a combination of the specialized hardware and the computer instructions.

The foregoing is only a specific implementation of the present disclosure. It can be clearly understood by those skilled in the art that, for the convenience and conciseness of the description, specific operating processes of the above-described systems, modules, and units can be known by referring to the corresponding processes in the foregoing method embodiments, and will not be repeated herein. It should be understood that the protection scope of the present disclosure is not limited to the description, and any person skilled in the art may readily think of various equivalent modifications or substitutions within the scope of the technology disclosed in the present disclosure. These modifications or substitutions should be included in the protection scope of the present disclosure.

## Claims

1. A method for determining a risky-activity user, comprising:
obtaining base station information of each of a first base station, a second base station, and a third base station associated with a risky-activity area; wherein the first base station is a base station that covers at least a portion of the risky-activity area, the second base station is a base station that has a risk of covering the at least a portion of the risky-activity area, and the third base station is a neighboring base station that is adjacent to the first base station or the second base station;
determining at least one potential risk user based on the base station information of each of the first base station, the second base station, and the third base station; wherein the potential risk user is a user that is located in a coverage area of at least one of the first base station, the second base station, and the third base station;
obtaining communication behavior data of each potential risk user of the at least one potential risk user; and
determining the risky-activity user among the at least one potential risk user based on the communication behavior data of each potential risk user.

2. The method according to claim 1, wherein the determining the at least one potential risk user based on the base station information of each of the first base station, the second base station, and the third base station, comprises:
obtaining message information of the user in the coverage area of each of the first base station, the second base station, and the third base station during a preset number of monitoring days; wherein the message information is configured to characterize the base station information in an area where the user is located; and
determining the user located in the coverage areas of at least two of the first base station, the second base station, and the third base station during the preset number of monitoring days as the potential risk user, based on the message information of each user during the preset number of the monitoring days.

3. The method according to claim 1, wherein the determining the risky-activity user among the at least one potential risk user based on the communication behavior data of each potential risk user, comprises:
obtaining the communication behavior data of each potential risk user during the preset number of the monitoring days; wherein the communication behavior data is configured to characterize usage of a communication resource by the potential risk user;
obtaining a resource overage count for each potential risk user based on the communication behavior data; wherein the resource overage count refers to number of times that the communication behavior data of the potential risk user during each time period is greater than an average value;
determining the potential risk users whose resource overage counts are greater than a first preset threshold as first potential high-risk users; and
determining the risky-activity user among the first potential high-risk users based on message information of each first potential high-risk user.

4. The method according to claim 3, wherein
after determining the potential risk users whose resource overage counts are greater than the first preset threshold as the first potential high-risk users, the method further comprises:
obtaining communication behavior data floating values based on the communication behavior data of the first potential high-risk users; wherein each communication behavior data floating value is configured to characterize a ratio of the communication behavior data of the first potential high-risk user during each time period to the communication behavior data during a corresponding time period of a previous day;
obtaining a floating overage count of each first potential high-risk user based on the communication behavior data floating values; wherein the floating overage count refers to number of times that the communication behavior data floating value of the first potential high-risk user during each time period is greater than a preset floating threshold; and
determining the potential high-risk users whose floating overage counts are greater than a second preset threshold as second potential high-risk users; and
the determining the risky-activity user among the first potential high-risk users based on the message information of each first potential high-risk user, comprises:
determining the risky-activity user among the second potential high-risk users based on the message information of each second potential high-risk user.

5. The method according to claim 3, wherein the determining the risky-activity user among the first potential high-risk users based on the message information of each first potential high-risk user, comprises:
determining activity information of each first potential high-risk user based on the message information of each first potential high-risk user during the preset number of the monitoring days; wherein the activity information is configured to characterize an activity area situation of the first potential high-risk user during the preset number of the monitoring days; and
determining the first potential high-risk user whose activity information is first risk activity information or second risk activity information as the risky-activity user, based on the activity information of each first potential high-risk user; wherein the first risk activity information refers to information of activities that occur simultaneously in the coverage area of the first base station and the coverage area of the second base station during the preset number of the monitoring days, and the second risk activity information refers to information of activities that occur simultaneously in the coverage area of the first base station and the coverage area of the third base station during the preset number of the monitoring days.

6. A device for determining a border risk user, comprising:
a base station information acquisition module, configured to obtain base station information of each of a first base station, a second base station, and a third base station associated with a risky-activity area; wherein the first base station is a base station that covers at least a portion of the risky-activity area, the second base station is a base station that has a risk of covering the at least a portion of the risky-activity area, and the third base station is a neighboring base station that is adjacent to the first base station or the second base station;
a first user determination module, configured to determine at least one potential risk user based on the base station information of each of the first base station, the second base station, and the third base station; wherein the potential risk user is a user located in a coverage area of at least one of the first base station, the second base station, and the third base station;
a behavior data acquisition module, configured to obtain communication behavior data of each potential risk user of the at least one potential risk user; and
a second user determination module, configured to determine the risky-activity user among the at least one potential risk user based on the communication behavior data of each potential risk user; wherein the risky-activity user is determined as a user with a risk activity.

7. The device according to claim 6, wherein the first user determination module comprises:
an information acquisition unit, configured to obtain message information of the user in the coverage area of each of the first base station, the second base station, and the third base station during a preset number of monitoring days; wherein the message information is configured to characterize the base station information in an area where the user is located; and
a first user determination unit, configured to determine the user located in the coverage areas of at least two of the first base station, the second base station, and the third base station during the preset number of the monitoring days as the potential risk user, based on the message information of each user during the preset number of the monitoring days.

8. The device according to claim 6, wherein the second user determination module comprises:
a data acquisition unit, configured to obtaining the communication behavior data of each potential risk user during a preset number of monitoring days; wherein the communication behavior data is configured to characterize usage of a communication resource by the potential risk user;
a count acquisition unit, configured to obtain a resource overage count of each potential risk user based on the communication behavior data; wherein the resource overage count refers to number of times that the communication behavior data of the potential risk user during each time period is greater than an average value;
a second user determination unit, configured to determine the potential risk users whose resource overage counts are greater than a first preset threshold as first potential high-risk users; and
a third user determination unit, configured to determine the risky-activity user among the first potential high-risk users based on message information of each first potential high-risk user.

9. An electronic device, comprising:
a processor; and
a memory, storing a computer program instruction;
wherein in a case where the processor executes the computer program instruction, the method for determining the risky-activity user according to any one of claims 1 to 5 is implemented.

10. A computer-readable storage medium storing a computer program instruction, wherein in a case where the computer program instruction is executed by a processor, the method for determining the risky-activity user according to any one of claims 1 to 5 is implemented.
